# EUROPEAN PATENT APPLICATION

(11) **EP 0 816 902 A2**
(43) Date of publication of application: **07.01.1998**
(21) Application number: 97304745.9
(22) Date of filing: 01.07.1997
(51) Int. Cl.: G02F 1/1339

(54) **A liquid crystal device**

(30) Priority: 05.07.1996 GB 9614198
(71) Applicant: CENTRAL RESEARCH LABORATORIES LIMITED, Hayes, Middlesex, UB3 1HH (GB); CRYSTALENS LIMITED, Cambridge CB3 0AX (GB)
(72) Inventor: Seaver, John, Yiewsley, Middlesex UB7 8LZ (GB)
(74) Representative: Leaman, Keith

(57) **Abstract**

A liquid crystal device comprises a pair of substrates (1, 2) each having a major surface (3, 4) spaced from and facing the other (4, 3) and a peripheral seal (9) defining a cavity (10) containing a liquid crystal material (11). The seal is formed by a thermoplastic gasket which is located in a groove (20) sunk into a major surface of a substrate. This arrangement can provide improved control of seal width and/or location on curved or uneven substrates such as eye wear or silicon backplane spatial light modulators.

## Description

This invention relates to a liquid crystal device, comprising a pair of substrates, each having a major surface which faces and is spaced from the other major surface, and a seal, which, with the major surfaces, defines a cavity containing liquid crystal material.

Devices such as this are known in which the seal is formed by screen printing a viscous UV curing adhesive onto the perimeter of a major surface of one substrate. A light-transmissive substrate is then placed on top of the sealant which is subsequently cured by exposing the sealant to ultra-violet light. This cures the sealant and secures one substrate to the other. Although this technique works well for large displays having planar substrates the position of the edge of the seal and its width are difficult to control accurately. This can be a disadvantage for more critical applications such as silicon backplane spatial light modulators (SLMs) or liquid crystal sunglasses as described in WO 94/11779.

An approach which attempts to solve these problems is disclosed in JP07-159795 in which sidewalls are placed on at least one surface to define a peripheral channel for the liquid sealant. This confines the liquid sealant to a precise area during assembly of the device. However, the sidewalls are difficult to form on small area devices which have an uneven surface topography, or on a curved surface.

According to a first aspect of the invention there is provided a liquid crystal device, comprising a pair of substrates each having a major surface which faces and is spaced from that of the other substrate, and a seal, which with the major surfaces defines a cavity containing liquid crystal material, at least one said major surface being provided with a peripheral channel for locating the seal, characterised in that the channel constitutes a groove which extends into the major surface of the substrate.

This arrangement can provide improved control of seal width and/or location on curved or uneven substrates and is effective for use in eye wear or for small LCDs where short seal widths are preferred.

According to a second aspect of the invention there is provided a liquid crystal device, comprising a pair of substrates each having a major surface which faces and is spaced from that of the other substrate, and a seal, which with the major surfaces defines a cavity containing liquid crystal material, at least one said major surface being provided with a peripheral channel for locating the seal, characterized in that the seal comprises a thermoplastic gasket.

This can make assembly easier as it becomes a substantially dry process (except during a short time when the gasket material is molten).

According to a third aspect of the invention there is provided a method of making a liquid crystal device including the steps of:-
a) forming a peripheral channel in a major surface of a substrate,
b) inserting a sealant into the channel such that it stands proud of the major surface,
c) assembling the said substrate and sealant together with a further substrate and spacing means to form a cavity having an opening for filling the cavity with a liquid crystal material,
d) filling the cavity with a liquid crystal material, and
e) sealing the opening.

Preferably the sealant comprises a gasket of thermoplastic material, and the substrates are secured to one another by melting and fusing the gasket.

The invention will now be described, by way of example only, with reference to the accompanying drawings in which:-

Figure 1 shows a cross section of a first device according to the invention.

Figure 2 shows a cross section of a second device according to the invention.

Figure 3 shows a flow diagram according to the invention.

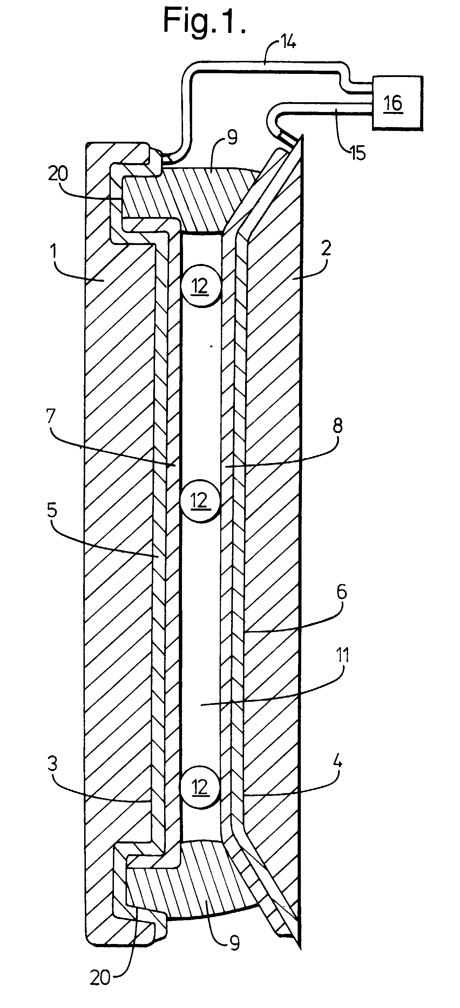

In figure 1, a liquid crystal device is shown which comprises a pair of substrates (1,2). In the present example these comprise a transparent organic thermosetting polymer material such as diethylene glycol bis (allyl carbonate) also known by trade names such as CR39. Each substrate has a major surface (3, 4) which faces, and is spaced from, a major surface of the other substrate (4, 3). In the present example, both major surfaces carry an electrically conductive layer (5, 6) and a layer (7, 8) for aligning the molecules of the liquid crystal material. The device also comprises a seal (9) which together with the major surfaces defines a cavity (10) which contains a liquid crystal material (11). In the present example the cavity contains a twisted nematic liquid crystal material, although a dichroic guest/host material may be used as an alternative. In the present example the cavity also contains a multiplicity of spacers (12), although such spacers are not an essential part of the present invention. In the present example both substrates are curved so as to have a pair of surfaces which are part of the wall of a cylinder. This curvature is not apparent in Figure 1 as the section has been taken in the plane of the axis of the cylinder. The axes of the cylinders of the two substrates are parallel to one another and lie in the plane of the paper.

One of the substrates (1) shown in Figure 1 is provided with a channel (20) positioned close to the perimeter of the substrate. Located within this channel is a seal (9). In the present example the seal comprises a thermoplastic gasket, but as an alternative a viscous liquid adhesive such as an epoxy resin or a UV curving optical adhesive such as Norland 68 may be used.

The device shown in Figure 1 is made in the following way. Circular CR39 blanks having a cylindrical curvature are commercially available from several sources. The blanks have markings to show the axis of curvature. These blanks are then machined to the required shape for left and right spectacle lenses (two substrates having the same shape are required for each eye). During machining a small tab is left protruding from each substrate (not shown) to make subsequent electrical connection easier. The outer edges of one major surface of some of the substrates are then chamfered. This chamfered edge will be arranged to face towards the other substrates in the assembled device. This enables viscous liquid adhesives to be introduced close to the seal after assembly if repairs are required to the seal. The rest of the substrates are then provided with a channel in the form of a groove which is sunk into the periphery of a major surface. This groove will be arranged to face towards the other substrate in the assembled device. In the present example the groove is formed by gouging out a trench 0.4 mm in depth and 0.4 mm in width using a gouging tool, but other methods of forming a trench may be employed such as moulding, stamping, etching, scribing or machining in other ways. The substrate surfaces are then cleaned by immersion in a dilute KOH solution, followed by rinsing and baking to remove moisture and reduce outgassing. The substrates are then loaded into an r.f. sputtering machine and coated with a layer of indium tin oxide (ITO) approximately 150 nm thick to form an electrically conductive layer having a sheet resistance of between 150 and 200 ohms per square. Such a layer appears substantially transparent to the naked eye. The substrates are arranged so that some substrates have the convex surface coated and some substrates have the concave surface coated. One substrate of each type will be arranged together with their ITO coated surfaces facing one another to form each finished device (as 1 and 2 shown in Figure 1).

The substrates are removed from the sputtering system and immediately spin coated with a pre imidised polyimide material. The polyimide chosen must have a low enough baking temperature to be compatible with the CR39 substrates. The polyimide is baked at 80°C which causes the solvents to evaporate. The polyimide is applied to the ITO coated surfaces immediately to minimise the chance of moisture absorption which will reduce the adhesion of the polyimide layer to the substrate. As an alternative, the ITO coated substrates may be kept in a dry ambient prior to spin coating.

The alignment structure is put into the polyimide layer by rubbing as is well known in the liquid crystal art, but specific tooling must be used to ensure uniform rubbing on the concave and convex surfaces of the substrate assemblies. The rubbing directions are chosen such that the alignment direction on the two substrate surfaces which will form the cavity are orthogonal when assembled in the present example, although other arrangements (such as for example parallel alignment directions) can be chosen if desired.

The spacers are applied to the substrate having its coatings on the convex surface. This is done using a 'cloud box' method. The spacers used are glass rods having a diameter of 6 microns, although diameters in the range 2 to 20 microns may be used if desired. Other spacer materials such as glass or plastic spheres or polyhedra may be used as an alternative. The rods are applied to the substrate at an approximate density of ten to fifteen per square millimetre, and are kept in place by van der Waals' forces.

A concave substrate having a peripheral groove is then chosen and sealant material is provided in the groove (except for a small gap which will be used to enable the assembled device to be filled with a liquid crystal). In the present example the sealant material is a thermoplastic gasket in the shape of an elongate flexible rod of hot melt adhesive approximately 0.6 mm in diameter. As an alternative, a viscous epoxy resin or UV curing adhesive may be used if desired, but such materials do not give the advantage of substantially dry assembly. A further convex substrate is then brought together with the concave substrate (which has the groove locating the sealant) such that the coated major surfaces face one another with the spacers therebetween touching both surfaces. As both the substrates in the present example are curved it is important to align the axes of the curved surfaces at this time to ensure a uniform spacing between the substrates.

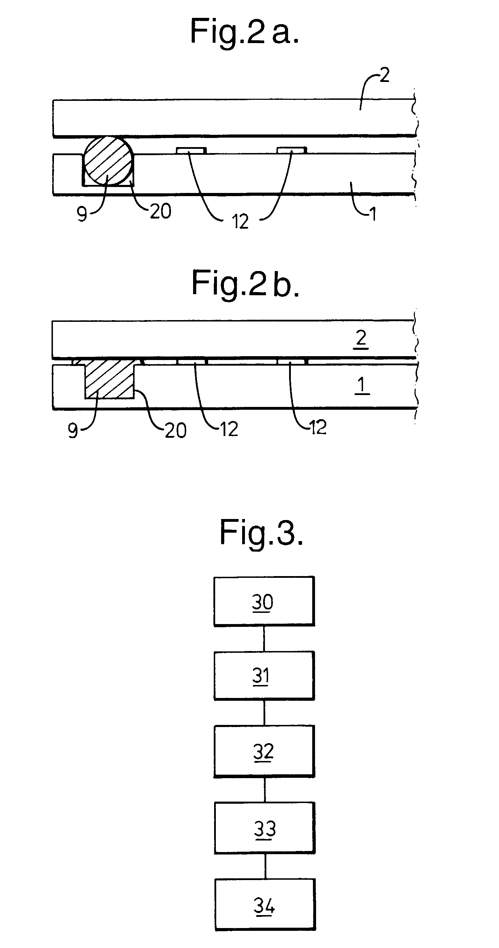

The thermoplastic gasket is then melted by increasing its temperature above its melting point (in the present case approximately 80°C). On cooling, the thermoplastic gasket solidifies, thereby securing one substrate to the other. It is convenient to remove the air from the cavity at this time to promote uniform spacing of the substrates by the spacers during the melting and solidifying (or curing) of the sealant material. This process is illustrated in Figure 2 a & b. Figure 2a shows a device with a thermoplastic gasket (a) prior to heating and melting, and Figure 2 b shows the same device after assembly when the gasket has melted, flowed, cooled and solidified to form a securing means and seal.

With the cavity evacuated, a liquid crystal material is introduced into the cavity by dipping and filling in the normal way. The gap in the perimeter seal is then closed and sealed with a UV curing sealant thus containing the liquid crystal in the device. The liquid crystal employed in the embodiment of Figure 1 is E7 doped with 0.05% of CB15, a twisted nematic material obtainable from Merck. Other twisted nematic or cholesteric materials may be used as an alternative.

Sheets of highly transmissive linear polarizer having an anti-abrasion coating are then laminated to the outer surfaces of the substrates in a conventional manner with their axes of polarization crossed to form the finished devices. Wires (14, 15) are attached to the ITO coating on the tabs protruding from each substrate and connected to drive electronics (16). The drive electronics are mounted on the frame of the eye wear comprising the device or devices. The drive electronics used is as described in patent application W093/24858 which is hereby incorporate herein by reference. Other drive systems known to those skilled in the art may be used as an alternative.

The eye wear incorporating the devices as described herein may be prescription spectacles or sun glasses or visors or ski goggles, or other eye protection. The substrates may be flat, cylindrically curved as described above or spherically curved, or have a more complex curvature. The polarizer sheets may be laminated to substrates before they are coated and assembled if desired. As an alternative, the polarizers may be incorporated into the substrates during casting.

As an alternative to use for eye wear, the device may take the form of a spatial light modulator. Preferably one substrate is formed by an integrated circuit such as for example a silicon chip.

It will be readily appreciated by a person skilled in the art that the use of a thermoplastic gasket with any form of guide means on the periphery of a substrate will be beneficial. A thermoplastic gasket may, for example, be used together with one or more sidewalls forming a channel on the surface of a substrate which does not extend into the major surface of the substrate.

The flow diagram shown in figure 3 illustrates a method according to one aspect of the present invention. The numbered boxes have the following significance.

Box 30 denotes the first step in the method, namely forming a peripheral channel in a major surface of a substrate.

Box 31 denotes the second step in the method, namely inserting a sealant into the channel such that it stand proud of the major surface. The sealant can be a viscous liquid or a solid body made of a thermoplastic material.

Box 32 denotes the further step of assembling the said substrate and sealant together with a further substrate and spacing means to form a cavity having an opening for filling the cavity with a liquid crystal material.

Box 33 denotes filling said cavity with said liquid crystal material.

Box 34 denotes sealing said opening to form the finished device.

Finally, the contents of the document from which the present application claims priority, namely GB 9615198.1, especially the drawings, is incorporated herein by reference.

## Claims

1. A liquid crystal device, comprising a pair of substrates (1, 2), each having a major surface (3, 4) which faces and is spaced from that of the other substrate, and a seal (9), which, with the major surfaces, defines a cavity (10) containing liquid crystal material (11), at least one said major surface being provided with a peripheral channel (22) for locating the seal, characterized in that the channel constitutes a groove which extends into the major surface of the substrate.

2. A liquid crystal device, comprising a pair of substrates (1, 2), each having a major surface (3, 4) which faces and is spaced from that of the other substrate, and a seal (9), which, with the major surfaces, defines a cavity (10) containing liquid crystal material (11), at least one said major surface being provided with a peripheral channel (22) for locating the seal, characterized in that the seal comprises a thermoplastic gasket.

3. A liquid crystal device as claimed in claim 1 in which the seal comprises a thermoplastic gasket.

4. A liquid crystal device as claimed in any preceding claim in which the major surface opposite the channel is chamfered such that the major surfaces diverge towards the outer edge of the substrates.

5. A liquid crystal device as claimed in any preceding claim in which one substrate comprises an integrated circuit.

6. A liquid crystal device as claimed in claim 1 or claim 2 in which the substrates are light transmissive.

7. A liquid crystal device as claimed in claim 6 comprising a lens for use in eye wear.

8. A liquid crystal device as claimed in claim 7 further comprising a polarizer and light transmissive electrodes carried by the substrates for varying the optical properties of the liquid crystal material in use.

9. A liquid crystal device as claimed in any preceding claim in which one or more substrates is (are) curved.

10. A liquid crystal device as claimed in any preceding claim in which the substrates comprise a hard thermosetting resin.

11. A method of making a liquid crystal device including the steps of:-
a) forming a peripheral channel in a major surface of a substrate,
b) inserting a sealant into the channel such that it stands proud of the major surface,
c) assembling the said substrate and sealant together with a further substrate and spacing means to form a cavity having an opening for filling the cavity with a liquid crystal material,
d) filling the cavity with a liquid crystal material, and
e) sealing the opening.

12. A method as claimed in claim 11 in which the sealant comprises a gasket of thermoplastic material and the substrates are secured to one another by melting then fusing the gasket.
